# EUROPEAN PATENT SPECIFICATION

(11) **EP 2 999 269 B1**
(45) Date of publication and mention of the grant of the patent: **01.05.2019**
(21) Application number: 14798114.6
(22) Date of filing: 14.05.2014
(51) Int. Cl.: H04W 36/24, H04J 11/00

(54) **CELL-BASED PROCESSING METHOD, SYSTEM, AND RELATED APPARATUS**
ZELLBASIERTES VERARBEITUNGSVERFAHREN, SYSTEM UND ZUGEHÖRIGE VORRICHTUNG
PROCÉDÉ DE TRAITEMENT BASÉ SUR LES CELLULES, SYSTÈME, ET APPAREIL CORRESPONDANT

(30) Priority: 17.05.2013 CN 201310186189
(43) Date of publication of application: 23.03.2016
(73) Proprietor: ZTE Corporation, Shenzhen, Guangdong 518057 (CN)
(72) Inventor: MO, Linmei, Shenzhen Guangdong 518057 (CN); ZHAO, Yajun, Shenzhen Guangdong 518057 (CN); XU, Hanqing, Shenzhen Guangdong 518057 (CN)
(74) Representative: Lavoix
(86) International application number: PCT/CN2014/077508
(87) International publication number: WO 2014/183647

(56) References cited:
- EP-A1- 0 569 693
- WO-A1-2011/019519
- CN-A- 101 873 677
- CN-A- 102 740 385
- 4g Americas: "Self-Optimizing Networks: Benefits of SON in LTE", , 25 July 2011 (2011-07-25), XP055083688, Retrieved from the Internet: URL:http://www.4gamericas.org/documents/Se lf-Optimizing Networks-Benefits of SON in LTE-July 2011.pdf [retrieved on 2013-10-11]

## Description

### TECHNICAL FIELD

The present disclosure relates to a cell switching technique, and more particularly to a cell-based processing method and system, and a related device.

### BACKGROUND

A small cell technique adopts a low power wireless access point, and may be used for expending a coverage range of a macro cell, distributing an increasing data traffic of the macro cell, and improving a usage efficiency of a radio frequency resource. This technique is used in a Long Term Evolution-Advanced (LTE-Advanced) system, to improve a network capacity.

The small cell is an integral component of an LTE network, and usually has a small size and a coverage range between 10 meters and 2 kilometres. A small cell deployment scene of the LTE network may be composed of two levels, namely the macro cell and the small cell. The macro cell and the small cell may be deployed at the same frequency point, namely co-channel deployment; and they may also be deployed at different frequency points, namely non co-channel deployment; further, the macro cell may also not be deployed, and only the small cell is deployed. The small cell may be deployed in an indoor environment, and may also be deployed in an outdoor environment; and thin deployment may be performed on the small cell, and thick deployment may also be performed on the small cell.

The small cell is an interference limited system, and there is a complicated interference relationship between the macro cell and the small cell, and between the small cells. A respective cell is respectively scheduled automatically as a terminal service in the cell. In addition, along with moving of a User Equipment (UE), there continuously is a UE moving into or out of the small cell, and an apparent fluctuation may be presented in a load and an interference of a small cell system. Therefore, a certain measure must be adopted to perform small cell interference rejection and coordination. A small cell self-adaptive switching measure is a kind of interference coordination method, and a basic idea is to self-adaptively open and close a certain small cell of which the load is too low, to reduce inter-cell interference, and particularly an interference brought by a common channel such as a CRS and etc.

When closed, the cell does not transmit downlink data and a reference signal for cell measurement and data demodulation any more, but may transmit certain discovery signals for a terminal to measure and discover the small cell at a long periodic interval. When the terminal moves into the coverage range of a sleep small cell, when the terminal measures that a signal intensity reaches to a certain degree, the terminal may perform feedback on a network side; after receiving the feedback, the network side activates the sleeping cell.

After activated, the sleeping cell starts to normally transmit a common signal, such as CRS, CSI-RS, PBCH, SCH, and etc. The UE triggering the activation of the small cell measures a downlink reference signal, and performs switching judgment according to a measurement result; if the UE meets a switching condition, then the UE may be switched into a newly activated cell. That is, the UE is needed to be switched into the newly activated cell through a switching procedure. During the switching process, because a target UE has entered a coverage area of the newly activated cell, the UE is still served by an original small cell. At this time, the common signal transmitted by the newly activated cell may cause a strong interference on the target UE, influencing user experience.

A white paper, in the title of self-optimizing networks: the benefits of SON in LTE, has described the related art.

### SUMMARY

In view of this, a main purpose of the present disclosure is to provide a cell-based processing method and system, and a related device, to be capable of reducing an interference suffered by a UE during switching to a newly activated cell and improving user experience.

The features of the method and device according to the present disclosure are defined in the independent claims, and the preferable features according to the present invention are defined in the dependent claims.

In the cell-based processing method and system, and the related device provided in the embodiment of the present disclosure, a first base station to which a first cell belongs transmits common channel information of the first cell to a second base station to which a second cell belongs, wherein the first cell is a cell activated by a network side according to sleeping cell discovery information transmitted by a UE, the second cell is a cell for currently providing a service for the UE, and the common channel information of the first cell is used for downlink interference cancellation. Through the scheme described by the embodiment of the present disclosure, an original service cell notifies the UE of the common channel information of a newly activated cell, so as to perform corresponding interference cancellation by the UE, so that an interference of a newly activated cell on the UE during switching to the newly activated cell can be reduced and user experience can be improved.

### BRIEF DESCRIPTION OF THE DRAWINGS

Fig. 1 is a flowchart of a cell-based processing method of an embodiment of the present disclosure;
Fig. 2 is a flowchart of another cell-based processing method of an embodiment of the present disclosure;
Fig. 3 is a structure view of a cell-based processing system of an embodiment of the present disclosure;
Fig. 4 is a flowchart of a cell switching according to Embodiment 1 of the present disclosure; and
Fig. 5 is a flowchart of a cell switching method according to Embodiment 2 of the present disclosure.

### DETAILED DESCRIPTION

A basic idea of the present disclosure is: a first base station to which a first cell belongs transmits common channel information of the first cell to a second base station to which a second cell belongs, and the first cell is a cell activated by a network side according to sleeping cell discovery information transmitted by a UE, and the second cell is a cell currently providing a service for the UE, and the common channel information of the first cell is used for downlink interference cancellation.

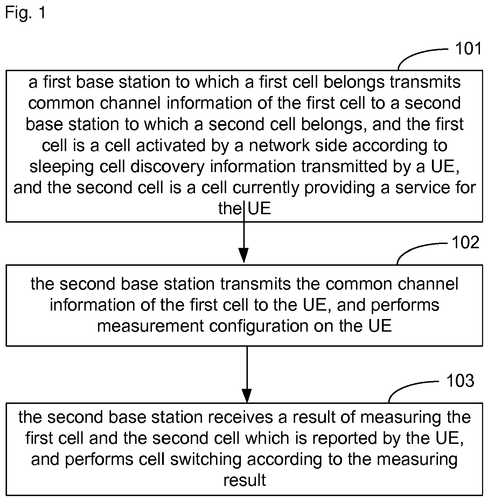

Fig. 1 is a flowchart of a cell-based processing method of an embodiment of the present disclosure, as shown in Fig. 1, this method includes:
Step 101: a first base station to which a first cell belongs transmits common channel information of the first cell to a second base station to which a second cell belongs, and the first cell is a cell activated by a network side according to sleeping cell discovery information transmitted by a UE, and the second cell is a cell currently providing a service for the UE;
here, the common channel information of the first cell is used for downlink interference cancellation.
Step 102: the second base station transmits the common channel information of the first cell to the UE, and performs measurement configuration on the UE;
Step 103: the second base station receives a result of measuring the first cell and the second cell which is reported by the UE, and performs cell switching according to the measuring result.

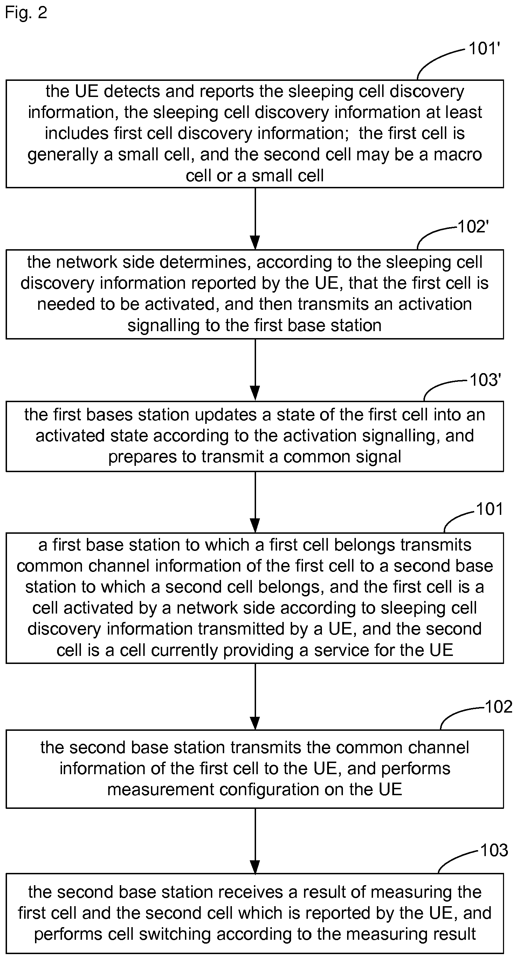

Alternatively, as shown in Fig. 2, before step 101, this method further includes:
Step 101': the UE detects and reports the sleeping cell discovery information, the sleeping cell discovery information at least includes first cell discovery information; the first cell is generally a small cell, and the second cell may be a macro cell or a small cell.
Step 102': the network side determines, according to the sleeping cell discovery information reported by the UE, that the first cell is needed to be activated, and then transmits an activation signalling to the first base station;
Step 103': the first bases station updates a state of the first cell into an activated state according to the activation signalling, and prepares to transmit a common signal.

Alternatively, this method further includes:
the network side notifies the UE of sleeping cell information and corresponding discovery signal information through broadcasting and/or RRC, whenever there is a sleeping cell in a network;
the UE updates a sleeping cell list according to broadcasting information and/or RRC information,
accordingly, detecting, by the UE, sleeping cell information is: the UE blind-detects a discovery signal of a sleeping cell in a sleeping cell list according to the sleeping cell list.

Alternatively, detecting, by the UE, sleeping cell information is: blind-detecting a discovery signal in a network according to preset discovery signal information, or measuring an intensity of a discovery signal in a network according to preset discovery signal information.

Alternatively, this method further includes:
the UE feeds back a discovery signal number DSID or a cell number PCID to an original service cell and/or another node in the network, or
the UE reports a result of measuring a discovery signal intensity in the network to an original service cell and/or another node in the network.

Alternatively, this method further includes: after the second base station transmits common channel information of the first cell to the UE,
the first base station transmits a common signal in a common channel of the first cell.

Alternatively, this method further includes: the UE performs interference cancellation according to the received common channel information of the first cell.

Alternatively, the transmitting, by the first base station, the common signal in the common channel of the first cell, and the performing, by the UE, the interference cancellation are performed at the same period of time.

Alternatively, the performing, by the UE, the interference cancellation according to the received common channel information of the first cell includes one or more of:
cancelling an interference of the first cell by adopting an interference cancellation method, such as a successive interference cancellation; and
performing data transmitting while avoiding the common channel of the first cell.

Alternatively, the performing, by the second base station, cell switching according to the measuring result includes:
the second base station performs switching determination according to the measuring result, and determines to switch the UE from the second cell to the first cell;
the second base station transmits switching request information to the first base station; and
the first base station performs acceptance control, and switches the UE to the first cell.

Alternatively, steps 101-102 may particularly include:
the network side transmits common channel information of respective cells in a preset cell set to preset one or more base stations, wherein the preset cell set includes the first cell, and the preset one or more base stations includes the second base station;
the second base station transmits the received common channel information of one or more cells to the UE through an RRC signalling; and
the second base station performs an indication on the UE through DCI, when the first cell is activated, so as to perform the interference cancellation by the UE and to perform measurement configuration on the UE.

Alternatively, the performing measurement configuration on the UE includes: configuring the UE to perform RRM measurement on the first cell and the second cell based on a CRS.

Alternatively, this method further includes:
the UE performs no CQI measurement result time domain smoothing when performing CQI measurement, after the first cell is activated;
the second base station obtains a corresponding MCS used when transmitting a downlink data, according to a result of the CQI measurement; and
the second base station performs actively rollback based on the obtained MCS.

Alternatively, the sleeping cell discovery information includes one or more of a discovery signal number, a cell number, a discovery signal frequentness, and a discovery signal intensity.

Alternatively, the common channel information includes one or more of CRS information used for interference cancellation, and CSI-RS information used for interference cancellation and rapid cell selection.

Alternatively, the CRS information includes: a corresponding cell ID, a number of a CRS port, a transmission bandwidth, a transmission sequence, and a transmission cycle; and the CSI-RS information includes one or more of a corresponding cell ID, a number of a CSI-RS port, and a CSI-RS configuration pattern.

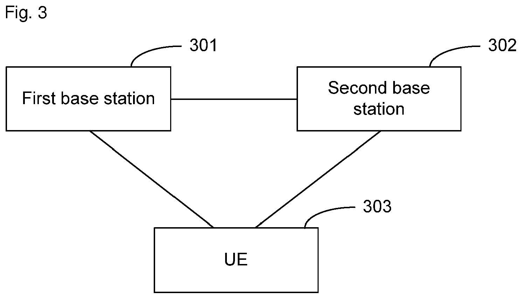

An embodiment of the present disclosure further provides a cell-based processing system accordingly, as shown in Fig. 3, this system includes: a first base station 301, a second base station 302, and a UE 303, wherein
the first base station 301 is configured to transmit common channel information of a first cell under this base station to a second base station to which a second cell belongs, wherein the first cell is a cell activated by a network side according to sleeping cell discovery information transmitted by a UE, the second cell is a cell for currently providing a service for the UE; and
the second base station 302 is configured to receive the common channel information of the first cell, wherein the common channel information of the first cell is used for downlink interference cancellation.

Alternatively, the second base station 302 is further configured to transmit the common channel information of the first cell to the UE, and to perform measurement configuration on the UE.

Alternatively, this system further includes the UE 303, configured to report a result of measuring the first cell and the second cell according to the measurement configuration.

Accordingly, the second base station 302 is further configured to receive the result of measuring the first cell and the second cell reported by the UE, and to perform cell switching according to the measuring result.

Alternatively, this system further includes a first network apparatus,
the UE is further configured to detect and report sleeping cell discovery information, wherein the sleeping cell discovery information at least includes first cell discovery information;
the first network apparatus is configured to determine that the first cell is needed to be activated according to the sleeping cell discovery information reported by the UE, and then to transmit an activation signalling to the first base station; and
the first base station is further configured to update a state of the first cell into an activated state according to the activation signalling, and to prepare to transmit a common signal.

Alternatively, this system further includes a second network apparatus, wherein
the second network apparatus is configured to notify the UE of sleeping cell information and corresponding discovery signal information through broadcasting and/or RRC, whenever there is a sleeping cell in a network; and
the UE 303 is particularly configured to update a sleeping cell list according to broadcasting information and/or RRC information, and to blind-detect a discovery signal of a sleeping cell in the sleeping cell list according to the sleeping cell list.

Alternatively, the UE 303 is particularly configured to blind-detect a discovery signal in a network according to preset discovery signal information, or to measure a discovery signal intensity in a network according to preset discovery signal information.

Alternatively, the UE 303 is further configured to feed back a discovery signal number DSID or a cell number PCID to an original service cell and/or another node in a network, or to report a result of measuring a discovery signal intensity in the network to an original service cell and/or another node in the network.

Alternatively, the first base station 301 is further configured to transmit a common signal in a common channel of the first cell; and
the UE 303 is further configured to perform interference cancellation according to the received common channel information of the first cell.

Alternatively, the UE 303 is particularly configured to cancel an interference of the first cell by adopting an interference cancellation method; and/or perform data transmission while avoiding the common channel of the first cell.

Alternatively, the second base station 302 is particularly configured to perform switching determination according to the measuring result, to determine to switch the UE from the second cell to the first cell, and then to transmit switching request information to the first base station; and
the first base station 301 is particularly configured to perform acceptance control, and to switch the UE to the first cell.

Alternatively, the first base station is particularly configured to transmit, in advance, common channel information of respective cells in a preset cell set to preset one or more base stations, wherein the preset cell set includes the first cell, and the preset one or more base stations include the second base station; and
the second base station is particularly configured to transmit, in advance, the received common channel information of one or more cells to the UE through an RRC signalling; and to perform an indication on the UE through DCI, when the first cell is activated, so as to perform the interference cancellation by the UE.

Alternatively, the UE 303 is further configured to perform no CQI measurement result time domain smoothing when performing CQI measurement, after the first cell is activated; and
the second base station is further configured to obtain a corresponding MCS used when transmitting a downlink data, according to a result of the CQI measurement of the UE; and to actively perform rollback based on the obtained MCS.

Alternatively, the sleeping cell discovery information includes one or more of a discovery signal number, a cell number, a discovery signal frequentness, and a discovery signal intensity.

Alternatively, the common channel information includes one or more of CRS information, and CSI-RS information, wherein
the CRS information includes one or more of a corresponding cell ID, a number of a CRS port, a transmission bandwidth, a transmission sequence, and a transmission cycle; and
the CSI-RS information includes one or more of a corresponding cell ID, a number of a CSI-RS port, and a CSI-RS configuration pattern.

An embodiment of the present disclosure further provides a base station accordingly, and this base station includes a transmitting module,
the transmitting module is configured to transmit common channel information of a first cell to a second base station to which a second cell belongs, wherein the first cell is a cell under the base station, which is activated by a network side according to sleeping cell discovery information transmitted by a UE, and the second cell is a cell for currently providing a service for the UE.

Alternatively, this base station further includes a broadcasting module, wherein
the broadcasting module is configured to notify the UE of sleeping cell information and corresponding discovery signal information through broadcasting, when there is a sleeping cell under this base station.

Alternatively, this base station further includes a notifying module, wherein
the RRC module is configured to notify the UE of sleeping cell information and corresponding discovery signal information through RRC, when there is a sleeping cell under this base station.

An embodiment of the present disclosure further provides a base station accordingly, and this base station includes an obtaining module, wherein
the obtaining module is configured to obtain common channel information of the first cell, wherein the first cell is a cell activated by a network side according to sleeping cell discovery information transmitted by a UE, a second cell under this base station provides a service for the UE, and the common channel information of the first cell is used for downlink interference cancellation.

Alternatively, this base station further includes a transmitting module, and a measurement configuration module, wherein
the transmitting module is configured to transmit the obtained common channel information of the first cell to the UE; and
the measurement configuration module is configured to perform measurement configuration on the UE.

Alternatively, this base station further includes: a cell switching module, wherein
the cell switching module is configured to receive a result of measuring the first cell and the second cell reported by the UE, and to perform cell switching according to the measuring result.

Alternatively, this base station further includes: a broadcasting module, wherein
the broadcasting module is configured to notify the UE of sleeping cell information and corresponding discovery signal information through broadcasting, when there is a sleeping cell under this base station.

Alternatively, this base station further includes an RRC module, wherein
the RRC module is configured to notify the UE of sleeping cell information and corresponding discovery signal information through RRC, when there is a sleeping cell under this base station.

An embodiment of the present disclosure further provides a UE accordingly, and this UE includes a sleeping cell discovery information detecting and transmitting module, a first receiving module, a second receiving module, and a measurement result reporting module, wherein a second cell under a second base station currently provides a service for the UE, and wherein
the sleeping cell discovery information detecting and transmitting module is configured to detect and report sleeping cell discovery information;
a first receiving module is configured to receive common channel information of a first cell, wherein the first cell is a cell activated by a network side according to the sleeping cell discovery information transmitted by the UE;
the second receiving module is configured to receiving measurement configuration information; and
the measurement result reporting module is configured to report a result of measuring the first cell and the second cell, according to the received measurement configuration information.

Alternatively, the sleeping cell discovery information detecting and transmitting module is particularly configured to blind-detect a discovery signal of a sleeping cell in a sleeping cell list according to the sleeping cell list, or to blind-detect a discovery signal in a network according to preset discovery signal information.

Alternatively, this UE further includes an interference cancellation module, wherein
the interference cancellation module is configured to perform interference cancellation according to the received common channel information of the first cell.

An embodiment of the present disclosure further provides a computer readable recording medium accordingly, in which a computer executable instruction used to perform the above method, is stored.

A technical scheme of the present disclosure is further explained in detail below through a particularly embodiment.

### Embodiment 1

A technical problem to be solved by Embodiment 1 of the present disclosure is: in a Small Cell scene, there are multiple small cells deployed in the same frequency, and in order to reduce interference and power consumption, it needs to self-adaptively perform turning on and off operation on the small cell. After activated from an off state, a turned off small cell begins to normally transmit a common signal. The UE within a coverage range of this small cell still receives a service of an original service cell. The newly activated cell becomes strong interference on the UE.

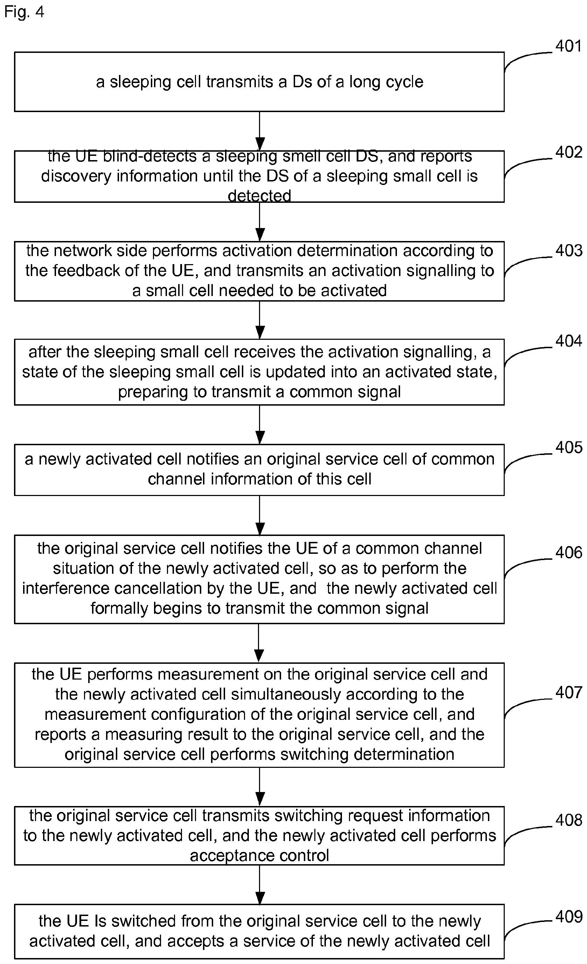

Fig. 4 is a view of a cell switching procedure according to Embodiment 1 of the present disclosure, as shown in Fig. 4, this procedure includes:
Step 401: a sleeping cell transmits a Discovery Signal (DS) of a long cycle.

If there is no terminal connection and no transmission in this small cell for a long period of time, then this small cell enters a sleeping state. With respect to the small cell entering the sleeping state, in order that a terminal may discover, activate, and connect to this cell to receive a service, the DS is needed to be transmitted in a long cycle.

Step 402: the UE blind-detects a sleeping smell cell DS, and reports discovery information until the DS of a sleeping small cell is detected.

Here, it should be noted that the UE deployed in the Small cell scene needs to blind-detect the DS of the sleeping small cell, and there are two situations:

### 1. The UE knows a sleeping small cell list in advance.

Particularly, whenever there is a sleeping cell in a network, a network side notifies all UEs of a cell ID of the sleeping cell and discovery signal information (such as a transmission sequence, a transmission cycle and other information); the UE in the network blind-detects discovery signals of all sleeping cells in the sleeping small cell list in a corresponding transmission cycle, according to the sleeping small cell list.

### 2. The UE does not know the sleeping small cell list.

Particularly, whenever there is a sleeping small cell in the network, the network side does not notify the UE of sleeping small cell related information. That is, whether the small cell is sleeping is transparent to the UE; the UE in the network blind-detects a discovery signal emerging in the network according to all possible discovery signal sequences and cycles.

When there are multiple sleeping small cells in a Small Cell network, the UE needs to measure reported discovery signals of multiple sleeping small cells. It needs to define a measurement quantity representing a signal intensity of the DS, to determine a cell intensity and to be used as a switching reference.

When the UE detects the discovery signal of the small cell, or the discovery signal reaches a certain frequentness or intensity, for example, the discovery signal is detected for a preset number of times in a certain preset time interval, or an energy value of the discovery signal reaches a certain preset threshold, the signal intensity of the DS, and a discovery signal number (DSID) or a cell number (PCID) are fed back to the original service cell.

The UE may report feedback information of all sleeping cells, and which small cell is to be activated is determined by the network side according to the feedback of the UE. Only the feedback information of the small cell having the strongest signal intensity may be reported, and after receiving the feedback of the UE the network side performs activation determination, to determine whether to activate this small cell.

Step 403: the network side performs activation determination according to the feedback of the UE, and transmits an activation signalling to a small cell needed to be activated.

Particularly, the network side determines whether a certain sleeping small cell is needed to be activated according to small cell discovery signal intensity information fed back by the UE and a real time loading situation of a network, and transmits an activation signalling to the sleeping small cell if a conclusion of the determination is that the sleeping small cell is needed to be activated.

Step 404: after the sleeping small cell receives the activation signalling, a state of the sleeping small cell is updated into an activated state, preparing to transmit a common signal.

Here, after receiving the feedback of the UE, the sleeping small cell updates a state thereof, to be updated from a sleeping state to an activated state, and prepares to transmit a common signal, such as a CRS, a PBCH, an SCH, and etc., that is to determine a transmission sequence, an occupied time frequency resource, transmission beginning time, and etc., but the transmission does not begin temporarily; the transmission begins after the UE receives corresponding information.

Step 405: a newly activated cell notifies an original service cell of common channel information of this cell.

The newly activated cell notifies the original service cell of the common channel information of this cell. The common channel information may include one or more of:
Cell Reference Signal (CRS) information, used for interference cancellation; and
Channel State Information-Reference Signal (CSI-RS) information, used for interference cancellation and rapid cell selection.

Wherein the CRS information may include one or more of a corresponding cell ID, a number of a CRS port, a transmission bandwidth, a transmission sequence, and a transmission cycle;
wherein the CSI-RS information includes a corresponding cell ID, a number of a CSI-RS port, a CSI-RS configuration pattern, and etc.

Step 406: the original service cell notifies the UE of a common channel situation of the newly activated cell, so as to perform the interference cancellation by the UE, and the newly activated cell formally begins to transmit the common signal.

The original service cell notifies the UE of the common channel information of the newly activated cell, including a transmission sequence, an occupied time frequency resource, transmission beginning time, and etc. The UE perform the interference cancellation with an assistance of the network side, for example, a Successive Interference Cancellation (SIC) and other method may be adopted to cancel the interference brought by the newly activated cell. Data transmission is performed while avoiding the common channel of the newly activated cell.

Furthermore, the UE may modify Channel Quality Indicator (CQI) measurement in an original system according to activation time of the newly activated cell. For example, time domain smoothing is unable to be performed on a CQI obtained by measuring the time before and after activating newly activated cell, and after the newly activated cell is activated, a certain rollback and etc. may be performed actively by transmitting a Modulation Coding Scheme (MCS).

Step 407: the original service cell performs measurement configuration on the UE, and the UE performs measurement on the original service cell and the newly activated cell simultaneously according to the measurement configuration, and reports a measuring result to the original service cell, and the original service cell performs switching determination.

Here, the UE performs cell measurement based on a downlink common signal transmitted by the newly activated cell, and at the same time, perform cell measurement on the original service cell based on a downlink common signal of the original service cell. For example, the UE perform RSRQ measurement based on CRS transmission of the newly activated cell and the original service cell. The UE reports results of the measurement to the original service cell, and the original compares the results of the measurement, to determine whether to switch the UE to the newly activated cell. When the result of the measurement of the newly activated cell is stronger than that of the original service cell, a switching operation is initiated.

Step 408: the original service cell transmits switching request information to the newly activated cell, and the newly activated cell performs acceptance control.

Since a loading level of the newly activated cell is very low, an acceptance control procedure may be very simple, which is almost direct acceptance. The newly activated cell performs switching preparation of L1/L2, and at the same time transmits a switching request ACK message, in which an RRC Container is contained, and a particular content is a switching command of triggering the UE to perform switching. The original service cell transparently transmits this switching command to the UE, and the UE subsequently initiates a switching process.

Step 409: the UE is switched from the original service cell to the newly activated cell, and accepts a service of the newly activated cell.

After receiving the switching command, the UE perform synchronization with the newly activated cell, and accesses the newly activated cell by using a random access procedure. When the UE successfully accesses a target cell, the UE transmits an RRC connection re-configuration completion message, to confirm the completion of the switching process with the newly activated cell. To this end, the UE has been switched from the original service cell to the newly activated cell, and begins to accept a service of the newly activated cell and to perform uplink and downlink data transmission.

All those described above are only preferred embodiments of the present disclosure, and are not used to limit the protection scope of the present disclosure.

### Embodiment 2

In this embodiment, a first base station set to which a first cell set belongs transmits common channel information of a first cell to a second base station to which a second cell belongs, wherein the first cell set includes all cells in a network which can sleep and can be activated, the second cell is a cell currently providing a service for the UE, and the second base station transmits, in advance, the common channel information of the first cell to the UE through an RRC signalling; when there is a sleeping cell or an activated cell in the first cell set, the second base station performs an indication through Downlink Control Information (DCI), so as to perform interference cancellation by the UE, and to perform measurement configuration on the UE; the second base station receives a result of measuring the first cell and the second cell reported by the UE, and performs cell switching according to the measuring result.

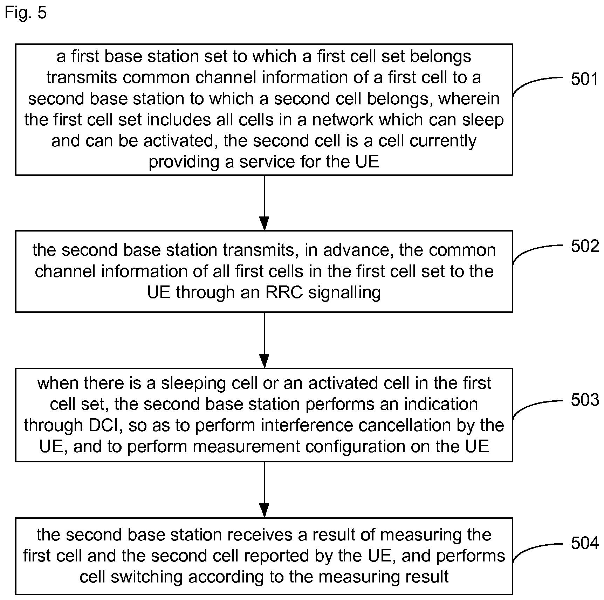

Fig. 5 is a view of a procedure of a cell switching method according to Embodiment 2 of the present disclosure, as shown in Fig. 5, this method includes:
Step 501: a first base station set to which a first cell set belongs transmits common channel information of a first cell to a second base station to which a second cell belongs, wherein the first cell set includes all cells in a network which can sleep and can be activated, the second cell is a cell currently providing a service for the UE;
Step 502: the second base station transmits, in advance, the common channel information of all first cells in the first cell set to the UE through an RRC signalling;
Step 503: when there is a sleeping cell or an activated cell in the first cell set, the second base station performs an indication through DCI, so as to perform interference cancellation by the UE, and to perform measurement configuration on the UE;
for example, the indication may be performed in a bitmap way, after knowing the common channel information of the activated cell, the UE may perform corresponding interference cancellation.

When there is a newly activated cell in a network, the second base station perform measurement configuration on the UE, and the UE begins to perform measurement on a newly activated first cell.

Step 504: the second base station receives a result of measuring the first cell and the second cell reported by the UE, and performs cell switching according to the measuring result.

It is needed to be explained that the above respective modules according to the embodiment of the present disclosure may be implemented with a Central Processing Unit (CPU), a Digital Signal Processor (DSP), or a Field-Programmable Gate Array (FPGA) in an electronic apparatus.

It should be understood by those skilled in the art that the embodiment of the present disclosure may be provided as a method, a system, or a computer program product. Therefore, the present disclosure may adopt a form of an embodiment such as a hardware embodiment, a software embodiment, or a combination of the hardware embodiment and the software embodiment. Also, the present disclosure may adopt a form of a computer program product implemented in a computer available storing medium (including but not being limited to a magnetic storage, an optical storage, and etc.) containing a computer available program code.

The present disclosure is described with reference to a method, a device (a system), and a flowchart and/or a block diagram of a computer program product. It should be understood that the flowchart and/or each procedure and/or block in the block diagram, and a combination of the procedure and/or the block in the flowchart and/or the block diagram may be implemented a computer program instruction. The computer program instruction may be provided to a processor of a universal computer, a dedicated computer, an embodied processing machine, or another programmable data processing apparatus to generate a machine, so that the instruction executed by the processor of the computer or the other programmable data processing apparatus generates a device for implementing a function assigned in one or more procedures of the flowchart and/or one or more blocks of the block diagram.

The computer program instruction may also be stored in a computer readable storage which can guide a computer or another programmable data processing apparatus to operate in a specific way, so that the instruction stored in this computer readable storage generates a manufacture including an instruction device, which implements a function assigned in one or more procedures of the flowchart and/or one or more blocks of the block diagram.

The computer program instruction may also be loaded in a computer or another programmable data processing apparatus, so that a serial of operating steps are executed in the computer or the other programmable device to generate a processing implemented by a computer, and thus the instruction executed in the computer or the other programmable apparatus provides a step for implementing a function assigned in one or more procedures of the flowchart and/or one or more blocks of the block diagram.

## Claims

1. A cell-based processing method, **characterized in that** the method comprises:
transmitting, by a first base station to which a first cell belongs, common channel information of the first cell to a second base station to which a second cell belongs, wherein the first cell is a cell activated by a network side according to sleeping cell discovery information transmitted by a User Equipment, UE, the second cell is a cell for currently providing a service for the UE, and the common channel information of the first cell is used for downlink interference cancellation (101);
transmitting, by the second base station, the common channel information of the first cell to the UE, and performing, by the UE, interference cancellation according to the received common channel information of the first cell;
wherein the step of performing, by the UE, the interference cancellation according to the received common channel information of the first cell comprises:
cancelling an interference of the first cell by adopting an interference cancellation method; and/or
performing data transmitting while avoiding a common channel of the first cell.

2. The method according to claim 1, further comprising:
performing, by the second base station, measurement configuration on the UE (102).

3. The method according to claim 2, further comprising:
receiving, by the second base station, a result of measuring the first cell and the second cell reported by the UE, and performing cell switching according to the measuring result (103).

4. The method according to claim 1, further comprising: before the first base station to which the first cell belongs transmits the common channel information of the first cell to the second base station to which the second cell belongs,
detecting and reporting, by the UE, the sleeping cell discovery information, wherein the sleeping cell discovery information at least comprises first cell discovery information (101');
transmitting, by the network side, an activation signalling to the first base station, after determining, according to the sleeping cell discovery information reported by the UE, that the first cell is needed to be activated (102'); and
updating, by the first base station, a state of the first cell into an activated state according to the activation signalling, and preparing to transmit a common signal (103').

5. The method according to claim 2, further comprising: after the second base station transmits common channel information of the first cell to the UE,
transmitting, by the first base station, a common signal in a common channel of the first cell.

6. The method according to claim 3, wherein the performing, by the second base station, cell switching according to the measuring result comprises:
performing, by the second base station, switching determination according to the measuring result, and determining to switch the UE from the second cell to the first cell;
transmitting, by the second base station, switching request information to the first base station; and
performing, by the first base station, acceptance control, and switching the UE to the first cell.

7. The method according to claim 3, further comprising:
transmitting, by the network side, common channel information of respective cells in a preset cell set to preset one or more base stations, wherein the preset cell set comprises the first cell, and the preset one or more base stations comprises the second base station;
transmitting, by the second base station, the received common channel information of one or more cells to the UE through an RRC signalling; and
performing, by the second base station, an indication on the UE through Downlink Control Information, DCI, when the first cell is activated.

8. The method according to any one of claims 1 to 7, wherein the sleeping cell discovery information comprises one or more of a discovery signal number, a cell number, a discovery signal frequentness, and a discovery signal intensity.

9. The method according to any one of claims 1 to 7, wherein the common channel information comprises one or more of Common Reference Signal, CRS, information, and a Channel State Information-Reference Signal, CSI-RS, information, wherein
the CRS information comprises one or more of a corresponding cell ID, a number of a CRS port, a transmission bandwidth, a transmission sequence, and a transmission cycle; and
the CSI-RS information comprises one or more of a corresponding cell ID, a number of a CSI-RS port, and a CSI-RS configuration pattern.

10. A cell-based processing system, **characterized in that** the system comprises: a first base station (301), and a second base station (302), wherein
the first base station (301) is configured to transmit common channel information of a first cell under this base station to a second base station (302) to which a second cell belongs, wherein the first cell is a cell activated by a network side according to sleeping cell discovery information transmitted by a User Equipment, UE, (303), the second cell is a cell for currently providing a service for the UE (303); and
the second base station (302) is configured to receive the common channel information of the first cell, wherein the common channel information of the first cell is used for downlink interference cancellation;
the second base station (302) is further configured to transmit the common channel information of the first cell to the UE (303), and the UE is configured to perform interference cancellation according to the received common channel information of the first cell;
wherein the UE is further configured to cancel an interference of the first cell by adopting an interference cancellation method; and/or to perform data transmission while avoiding a common channel of the first cell.

11. The system according to claim 10, wherein
the second base station (302) is further configured to perform measurement configuration on the UE (303).

12. The system according to claim 11, further comprising a UE (303),
the UE (303) is configured to report a result of measuring the first cell and the second cell according to the measurement configuration.

13. The system according to claim 12, further comprising a first network apparatus,
the UE (303) is further configured to detect and report the sleeping cell discovery information, wherein the sleeping cell discovery information at least comprises first cell discovery information;
the first network apparatus is configured to determine that the first cell is needed to be activated according to the sleeping cell discovery information reported by the UE (303), and then to transmit an activation signalling to the first base station (301); and
the first base station (301) is further configured to update a state of the first cell into an activated state according to the activation signalling, and to prepare to transmit a common signal.

14. The system according to claim 13, wherein
the first base station (301) is further configured to transmit a common signal in a common channel of the first cell.

15. The system according to claim 13, wherein
the second base station (302) is configured to perform switching determination according to the measuring result, to determine to switch the UE (303) from the second cell to the first cell, and then to transmit switching request information to the first base station (301); and
the first base station (301) is configured to perform acceptance control, and to switch the UE (303) to the first cell.

16. The system according to claim 13, wherein
the first base station (301) is configured to transmit, in advance, common channel information of respective cells in a preset cell set to preset one or more base stations, wherein the preset cell set comprises the first cell, and the preset one or more base stations comprise the second base station (302); and
the second base station (302) is configured to transmit, in advance, the received common channel information of one or more cells to the UE (303) through an RRC signalling; and to perform an indication on the UE (303) through DCI, when the first cell is activated.

17. The system according to any one of claims 10 to 16, wherein the sleeping cell discovery information comprises one or more of a discovery signal number, a cell number, a discovery signal frequentness, and a discovery signal intensity.

18. The system according to any one of claims 10 to 16, wherein the common channel information comprises one or more of Common Reference Signal, CRS information, and a Channel State Information-Reference Signal, CSI-RS, information, wherein
the CRS information comprises one or more of a corresponding cell ID, a number of a CRS port, a transmission bandwidth, a transmission sequence, and a transmission cycle; and
the CSI-RS information comprises one or more of a corresponding cell ID, a number of a CSI-RS port, and a CSI-RS configuration pattern.

19. A computer readable recording medium, in which a computer executable instruction used to perform the method according to any one of claims 1 to 9, is stored.

## Patentansprüche

1. Zellbasiertes Verarbeitungsverfahren, **dadurch gekennzeichnet, dass** das Verfahren umfasst:
Senden durch eine erste Basisstation, zu welcher eine erste Zelle gehört, von Informationen über einen gemeinsamen Kanal der ersten Zelle an eine zweite Basisstation, zu welcher eine zweite Zelle gehört, wobei die erste Zelle eine Zelle ist, die durch eine Netzwerkseite gemäß Informationen über die Erkennung einer Zelle im Ruhezustand, die durch eine Benutzereinrichtung, UE, gesendet werden, aktiviert wird, die zweite Zelle eine Zelle zum gegenwärtigen Bereitstellen eines Dienstes für die UE ist, und die Informationen über den gemeinsamen Kanal der ersten Zelle zur Downlink-Störungsunterdrückung verwendet werden (101);
Senden durch die zweite Basisstation der Informationen über den gemeinsamen Kanal der ersten Zelle an die UE und Durchführen von Störungsunterdrückung durch die UE gemäß den empfangenen Informationen über den gemeinsamen Kanal der ersten Zelle;
wobei der Schritt des Durchführens der Störungsunterdrückung durch die UE gemäß den empfangenen Informationen über den gemeinsamen Kanal der ersten Zelle umfasst:
Unterdrücken einer Störung der ersten Zelle durch Anwenden eines Störungsunterdrückungsverfahrens; und/oder
Durchführen von Datenübertragung bei Vermeiden eines gemeinsamen Kanals der ersten Zelle.

2. Verfahren nach Anspruch 1, ferner umfassend:
Durchführen einer Messkonfiguration durch die zweite Basisstation an der UE (102).

3. Verfahren nach Anspruch 2, ferner umfassend:
Empfangen durch die zweite Basisstation eines Ergebnisses des Messens der ersten Zelle und der zweiten Zelle, das durch die UE gemeldet wird, und Durchführen eines Zellwechsels gemäß dem Messergebnis (103).

4. Verfahren nach Anspruch 2, ferner umfassend, bevor die erste Basisstation, zu welcher die erste Zelle gehört, die Informationen über den gemeinsamen Kanal der ersten Zelle an die zweite Basisstation sendet, zu welcher die zweite Zelle gehört,
Erkennen und Melden durch die UE der Informationen über die Erkennung der Zelle im Ruhezustand, wobei die Informationen über die Erkennung der Zelle im Ruhezustand mindestens erste Zellerkennungsinformationen umfassen (101');
Senden einer Aktivierungssignalisierung durch die Netzwerkseite an die erste Basisstation nach einem Bestimmen gemäß den durch die UE gemeldeten Informationen über die Erkennung der Zelle im Ruhezustand, dass die erste Zelle aktiviert werden muss (102'); und
Aktualisieren durch die erste Basisstation eines Zustands der ersten Zelle auf einen aktivierten Zustand gemäß der Aktivierungssignalisierung und Vorbereiten zum Senden eines gemeinsamen Signals (103').

5. Verfahren nach Anspruch 2, ferner umfassend nach dem Senden durch die zweite Basisstation der Informationen über den gemeinsamen Kanal der ersten Zelle an die UE:
Senden eines gemeinsamen Signals durch die erste Basisstation in einem gemeinsamen Kanal der ersten Zelle.

6. Verfahren nach Anspruch 3, wobei das Durchführen des Zellwechsels durch die zweite Basisstation gemäß dem Messergebnis umfasst:
Durchführen durch die zweite Basisstation einer Wechselbestimmung gemäß dem Messergebnis und Bestimmen, die UE von der zweiten Zelle zur ersten Zelle zu wechseln;
Senden von Wechselanforderungsinformationen durch die zweite Basisstation an die erste Basisstation; und
Durchführen durch die erste Basisstation von Akzeptierungssteuerung und Wechseln der UE zur ersten Zelle.

7. Verfahren nach Anspruch 3, ferner umfassend:
Senden durch die Netzwerkseite von Informationen über einen gemeinsamen Kanal von jeweiligen Zellen in einem im Voraus festgelegten Zellensatz an eine oder mehrere im Voraus festgelegte Basisstationen, wobei der im Voraus festgelegte Zellensatz die erste Zelle umfasst, und die eine oder die mehreren im Voraus festgelegten Basisstationen die zweite Basisstation umfassen;
Senden der empfangenen Informationen über den gemeinsamen Kanal einer oder mehrerer Zellen durch die zweite Basisstation durch eine RRC-Signalisierung an die UE; und
Durchführen einer Anzeige durch die zweite Basisstation durch Downlink-Steuerinformationen an der UE, wenn die erste Zelle aktiviert wird.

8. Verfahren nach einem der Ansprüche 1 bis 7, wobei die Informationen über die Erkennung der Zelle im Ruhezustand eines oder mehreres von einer Erkennungssignalnummer, einer Zellnummer, einer Erkennungssignalhäufigkeit und einer Erkennungssignalstärke umfassen.

9. Verfahren nach einem der Ansprüche 1 bis 7, wobei die Informationen über einen gemeinsamen Kanal eine oder mehreres von gemeinsames Referenzsignal, CRS,-Informationen und einer Kanalzustandsinformations-Referenzsignal, CSI-RS,-Information umfassen, wobei
die CRS-Informationen eines oder mehreres von einer entsprechenden Zell-ID, einer Nummer eines CRS-Ports, einer Übertragungsbandbreite, einer Übertragungsfolge und einem Übertragungszyklus umfassen; und
die CSI-RS-Information eines oder mehrere von einer entsprechenden Zell-ID, einer Nummer eines CSI-RS-Ports und einem CSI-RS-Konfigurationsmuster umfasst.

10. Zellbasiertes Verarbeitungssystem, **dadurch gekennzeichnet, dass** das System umfasst: eine erste Basisstation (301) und eine zweite Basisstation (302), wobei
die erste Basisstation (301) so konfiguriert ist, dass sie Informationen über einen gemeinsamen Kanal einer ersten Zelle, die zu dieser Basisstation gehört, an eine zweite Basisstation (302) sendet, zu welcher eine zweite Zelle gehört, wobei die erste Zelle eine Zelle ist, die durch eine Netzwerkseite gemäß Informationen über die Erkennung einer Zelle im Ruhezustand, die durch eine Benutzereinrichtung, UE, (303) gesendet werden, aktiviert wird, wobei die zweite Zelle eine Zelle zum gegenwärtigen Bereitstellen eines Dienstes für die UE ist; und
die zweite Basisstation (302) so konfiguriert ist, dass sie die Informationen über den gemeinsamen Kanal der ersten Zelle empfängt, wobei die Informationen über den gemeinsamen Kanal der ersten Zelle zur Downlink-Störungsunterdrückung verwendet werden;
die zweite Basisstation (302) so konfiguriert ist, dass sie die Informationen über den gemeinsamen Kanal der ersten Zelle an die UE (303) sendet, und die UE so konfiguriert ist, dass sie Störungsunterdrückung gemäß den empfangenen Informationen über den gemeinsamen Kanal der ersten Zelle durchführt;
wobei die UE ferner so konfiguriert ist, dass sie Störung der ersten Zelle durch Anwenden eines Störungsunterdrückungsverfahrens unterdrückt; und/oder Datenübertragung bei Vermeiden eines gemeinsamen Kanals der ersten Zelle durchführt.

11. System nach Anspruch 10, wobei:
die zweite Basisstation (302) ferner zum Durchführen einer Messkonfiguration an der UE (303) konfiguriert ist.

12. System nach Anspruch 11, ferner umfassend eine UE (303),
wobei die UE (303) zum Melden eines Ergebnisses des Messens der ersten Zelle und der zweiten Zelle gemäß der Messkonfiguration konfiguriert ist.

13. System nach Anspruch 12, ferner umfassend eine erste Netzwerkvorrichtung,
wobei die UE (303) ferner zum Erkennen und Melden der Informationen über die Erkennung der Zelle im Ruhezustand konfiguriert ist, wobei die Informationen über die Erkennung der Zelle im Ruhezustand mindestens erste Zellerkennungsinformationen umfassen;
die erste Netzwerkvorrichtung so konfiguriert ist, dass sie gemäß den durch die UE (303) gemeldeten Informationen über die Erkennung der Zelle im Ruhezustand bestimmt, dass die erste Zelle aktiviert werden muss, und anschließend eine Aktivierungssignalisierung an die erste Basisstation (301) sendet; und
die erste Basisstation (301) ferner zum Aktualisieren eines Zustands der ersten Zelle auf einen aktivierten Zustand gemäß der Aktivierungssignalisierung und Vorbereiten zum Senden eines gemeinsamen Signals konfiguriert ist.

14. System nach Anspruch 13, wobei
die erste Basisstation (301) ferner zum Senden eines gemeinsamen Signals in einem gemeinsamen Kanal der ersten Zelle konfiguriert ist.

15. System nach Anspruch 13, wobei
die zweite Basisstation (302) so konfiguriert ist, dass sie eine Wechselbestimmung gemäß dem Messergebnis durchführt, bestimmt, die UE (303) von der zweiten Zelle zur ersten Zelle zu wechseln, und anschließend Wechselanforderungsinformationen an die erste Basisstation (301) sendet; und
die erste Basisstation zum Durchführen von Akzeptierungssteuerung und Wechseln der UE (303) zur ersten Zelle konfiguriert ist.

16. System nach Anspruch 13, wobei
die erste Basisstation (301) zum Vorabsenden von Informationen über einen gemeinsamen Kanal von jeweiligen Zellen in einem im Voraus festgelegten Zellensatz an eine oder mehrere im Voraus festgelegte Basisstationen konfiguriert ist, wobei der im Voraus festgelegte Zellensatz die erste Zelle umfasst, und die eine oder die mehreren im Voraus festgelegten Basisstationen die zweite Basisstation (302) umfassen; und
die zweite Basisstation (302) so konfiguriert ist, dass sie die empfangenen Informationen über den gemeinsamen Kanal einer oder mehrerer Zellen durch eine RRC-Signalisierung an die UE (303) sendet; und eine Anzeige durch DCI an der UE (303) durchführt, wenn die erste Zelle aktiviert wird.

17. System nach einem der Ansprüche 10 bis 16, wobei die Informationen über die Erkennung der Zelle im Ruhezustand eines oder mehreres von einer Erkennungssignalnummer, einer Zellnummer, einer Erkennungssignalhäufigkeit und einer Erkennungssignalstärke umfassen.

18. System nach einem der Ansprüche 10 bis 16, wobei die Informationen über den gemeinsamen Kanal eine oder mehreres von gemeinsames Referenzsignal, CRS,-Informationen und einer Kanalzustandsinformations-Referenzsignal, CSI-RS,-Information umfassen, wobei
die CRS-Informationen eines oder mehreres von einer entsprechenden Zell-ID, einer Nummer eines CRS-Ports, einer Übertragungsbandbreite, einer Übertragungsfolge und einem Übertragungszyklus umfassen; und
die CSI-RS-Information eines oder mehreres von einer entsprechenden Zell-ID, einer Nummer eines CSI-RS-Ports und einem CSI-RS-Konfigurationsmuster umfasst.

19. Computerlesbares Aufzeichnungsmedium, worauf eine computerausführbare Anweisung gespeichert ist, die zum Durchführen des Verfahrens nach einem der Ansprüche 1 bis 9 verwendet wird.

## Revendications

1. Procédé de traitement basé sur les cellules, **caractérisé en ce que** le procédé comprend les étapes ci-dessous consistant à :
transmettre, par le biais d'une première station de base à laquelle appartient une première cellule, des informations de canal commun de la première cellule à une seconde station de base à laquelle appartient une seconde cellule, la première cellule étant une cellule activée par un côté de réseau selon des informations de découverte de cellules dormantes transmises par un équipement d'utilisateur, UE, la seconde cellule étant une cellule destinée à fournir actuellement un service pour l'équipement UE, et les informations de canal commun de la première cellule étant utilisées dans le cadre d'une annulation de brouillage en liaison descendante (101) ;
transmettre, par le biais de la seconde station de base, les informations de canal commun de la première cellule à l'équipement UE, et mettre en oeuvre, par le biais de l'équipement UE, une annulation de brouillage selon les informations de canal commun reçues de la première cellule ;
dans lequel l'étape consistant à mettre en oeuvre, par le biais de l'équipement UE, l'annulation de brouillage selon les informations de canal commun reçues de la première cellule comprend les étapes ci-dessous consistant à :
annuler un brouillage de la première cellule en adoptant un procédé d'annulation de brouillage ; et/ou
mettre en oeuvre une transmission de données tout en évitant un canal commun de la première cellule.

2. Procédé selon la revendication 1, comprenant en outre l'étape ci-dessous consistant à :
mettre en oeuvre, par le biais de la seconde station de base, une configuration de mesure sur l'équipement UE (102).

3. Procédé selon la revendication 2, comprenant en outre les étapes ci-dessous consistant à :
recevoir, par le biais de la seconde station de base, un résultat de mesure de la première cellule et de la seconde cellule, signalé par l'équipement UE, et mettre en oeuvre une commutation de cellule selon le résultat de mesure (103).

4. Procédé selon la revendication 1, comprenant en outre les étapes ci-dessous consistant à : avant que la première station de base à laquelle appartient la première cellule ne transmette les informations de canal commun de la première cellule à la seconde station de base à laquelle appartient la seconde cellule :
détecter et signaler, par le biais de l'équipement UE, les informations de découverte de cellules dormantes, les informations de découverte de cellules dormantes comprenant au moins des premières informations de découverte de cellules (101') ;
transmettre, par le côté de réseau, une signalisation d'activation, à la première station de base, dès lors qu'il a été déterminé, selon les informations de découverte de cellules dormantes signalées par l'équipement UE, que la première cellule doit être activée (102') ; et
mettre à jour, par le biais de la première station de base, un état de la première cellule en un état activé, selon la signalisation d'activation, et se préparer à transmettre un signal commun (103').

5. Procédé selon la revendication 2, comprenant en outre l'étape ci-dessous consistant à : après que la seconde station de base a transmis des informations de canal commun de la première cellule à l'équipement UE :
transmettre, par le biais de la première station de base, un signal commun dans un canal commun de la première cellule.

6. Procédé selon la revendication 3, dans lequel l'étape de mise en oeuvre, par le biais de la seconde station de base, d'une commutation de cellule selon le résultat de mesure comprend les étapes ci-dessous consistant à :
mettre en oeuvre, par le biais de la seconde station de base, une détermination de commutation selon le résultat de mesure, et déterminer qu'il convient de commuter l'équipement UE, de la seconde cellule à la première cellule ;
transmettre, par le biais de la seconde station de base, des informations de demande de commutation, à la première station de base ; et
mettre en oeuvre, par le biais de la première station de base, une commande d'acceptation, et commuter l'équipement UE vers la première cellule.

7. Procédé selon la revendication 3, comprenant en outre les étapes ci-dessous consistant à :
transmettre, par le côté de réseau, des informations de canal commun de cellules respectives dans un ensemble de cellules prédéfini pour prédéfinir une ou plusieurs stations de base, l'ensemble de cellules prédéfini comprenant la première cellule, et ladite une ou lesdites plusieurs stations de base prédéfinies comprenant la seconde station de base ;
transmettre, par le biais de la seconde station de base, les informations de canal commun reçues d'une ou de plusieurs cellules à l'équipement UE, par l'intermédiaire d'une signalisation de gestion de ressources radio, RRC ; et
mettre en oeuvre, par le biais de la seconde station de base, une indication sur l'équipement UE, par le biais d'informations de commande de liaison descendante, DCI, lorsque la première cellule est activée.

8. Procédé selon l'une quelconque des revendications 1 à 7, dans lequel les informations de découverte de cellules dormantes comprennent un ou plusieurs éléments parmi un numéro de signal de découverte, un numéro de cellule, une fréquence de signal de découverte et une intensité de signal de découverte.

9. Procédé selon l'une quelconque des revendications 1 à 7, dans lequel les informations de canal commun comprennent une ou plusieurs informations parmi des informations de signal de référence commun, CRS, et des informations de signal de référence d'informations d'état de canal, CSI-RS, dans lequel :
les informations de signal CRS comprennent un ou plusieurs éléments parmi un identifiant de cellule correspondante, un numéro d'un port de signal CRS, une largeur de bande de transmission, une séquence de transmission, et un cycle de transmission ; et
les informations de signal CSI-RS comprennent un ou plusieurs éléments parmi un identifiant de cellule correspondante, un numéro d'un port de signal CSI-RS et un motif de configuration de signal CSI-RS.

10. Système de traitement basé sur les cellules, **caractérisé en ce que** le système comprend : une première station de base (301), et une seconde station de base (302), dans lequel :
la première station de base (301) est configurée de manière à transmettre des informations de canal commun d'une première cellule sous la commande de cette station de base, à une seconde station de base (302) à laquelle appartient une seconde cellule, la première cellule étant une cellule activée par un côté de réseau selon des informations de découverte de cellules dormantes transmises par un équipement d'utilisateur, UE, (303), la seconde cellule étant une cellule destinée à fournir actuellement un service pour l'équipement UE (303) ; et
la seconde station de base (302) est configurée de manière à recevoir les informations de canal commun de la première cellule, les informations de canal commun de la première cellule étant utilisées dans le cadre d'une annulation de brouillage en liaison descendante ;
la seconde station de base (302) est en outre configurée de manière à transmettre les informations de canal commun de la première cellule à l'équipement UE (303), et l'équipement UE est configuré de manière à mettre en oeuvre une annulation de brouillage selon les informations de canal commun reçues de la première cellule ;
dans lequel l'équipement UE est en outre configuré de manière à annuler un brouillage de la première cellule en adoptant un procédé d'annulation de brouillage ; et/ou à mettre en oeuvre une transmission de données tout en évitant un canal commun de la première cellule.

11. Système selon la revendication 10, dans lequel :
la seconde station de base (302) est en outre configurée de manière à mettre en oeuvre une configuration de mesure sur l'équipement UE (303).

12. Système selon la revendication 11, comprenant en outre un équipement UE (303) ;
dans lequel l'équipement UE (303) est configuré de manière à signaler un résultat de mesure de la première cellule et de la seconde cellule selon la configuration de mesure.

13. Système selon la revendication 12, comprenant en outre un premier appareil de réseau ;
dans lequel l'équipement UE (303) est en outre configuré de manière à détecter et signaler les informations de découverte de cellules dormantes, les informations de découverte de cellules dormantes comprenant au moins des premières informations de découverte de cellules ;
dans lequel le premier appareil de réseau est configuré de manière à déterminer que la première cellule doit être activée selon les informations de découverte de cellules dormantes signalées par l'équipement UE (303), et à transmettre ensuite une signalisation d'activation à la première station de base (301) ; et
la première station de base (301) est en outre configurée de manière à mettre à jour un état de la première cellule en un état activé selon la signalisation d'activation, et à se préparer à transmettre un signal commun.

14. Système selon la revendication 13, dans lequel :
la première station de base (301) est en outre configurée de manière à transmettre un signal commun dans un canal commun de la première cellule.

15. Système selon la revendication 13, dans lequel :
la seconde station de base (302) est configurée de manière à mettre en oeuvre une détermination de commutation selon le résultat de mesure, à déterminer qu'il convient de commuter l'équipement UE (303), de la seconde cellule à la première cellule, et ensuite à transmettre des informations de demande de commutation à la première station de base (301) ; et
la première station de base (301) est configurée de manière à mettre en oeuvre une commande d'acceptation, et à commuter l'équipement UE (303) sur la première cellule.

16. Système selon la revendication 13, dans lequel :
la première station de base (301) est configurée de manière à transmettre, à l'avance, des informations de canal commun de cellules respectives dans un ensemble de cellules prédéfini pour prédéfinir une ou plusieurs stations de base, l'ensemble de cellules prédéfini comprenant la première cellule, et ladite une ou lesdites plusieurs stations de base prédéfinies comprenant la seconde station de base (302) ; et
la seconde station de base (302) est configurée de manière à transmettre, à l'avance, les informations de canal commun reçues d'une ou de plusieurs cellules à l'équipement UE (303), par le biais d'une signalisation de gestion RRC ; et à mettre en oeuvre une indication sur l'équipement UE (303) par l'intermédiaire d'informations de commande de liaison descendante, DCI, lorsque la première cellule est activée.

17. Système selon l'une quelconque des revendications 10 à 16, dans lequel les informations de découverte de cellules dormantes comprennent un ou plusieurs éléments parmi un numéro de signal de découverte, un numéro de cellule, une fréquence de signal de découverte et une intensité de signal de découverte.

18. Système selon l'une quelconque des revendications 10 à 16, dans lequel les informations de canal commun comprennent une ou plusieurs informations parmi des informations de signal de référence commun, CRS, et des informations de signal de référence d'informations d'état de canal, CSI-RS, dans lequel :
les informations de signal CRS comprennent un ou plusieurs éléments parmi un identifiant de cellule correspondante, un numéro d'un port de signal CRS, une largeur de bande de transmission, une séquence de transmission, et un cycle de transmission ; et
les informations de signal CSI-RS comprennent un ou plusieurs éléments parmi un identifiant de cellule correspondante, un numéro d'un port de signal CSI-RS et un motif de configuration de signal CSI-RS.

19. Support d'enregistrement lisible par ordinateur, dans lequel est stockée une instruction exécutable par ordinateur utilisée en vue de mettre en oeuvre le procédé selon l'une quelconque des revendications 1 à 9.
